(19) **Europäisches Patentamt**

**European Patent Office**

**Office européen des brevets**

(11) **EP 1 592 257 A1**

(12) **EUROPEAN PATENT APPLICATION**

(43) Date of publication:
**02.11.2005 Bulletin 2005/44**

(51) Int Cl.⁷: **H04N 7/26**, H04N 7/50

(21) Application number: **05006647.1**

(22) Date of filing: **24.03.2005**

| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventor: **Lee, Hyun-Seung**<br>**Yeongtong-gu, Suwon-si, Gyeonggi-do (KR)** |
|---|---|
| (30) Priority: **30.04.2004 KR 2004030563** | (74) Representative: **Grünecker, Kinkeldey, Stockmair & Schwanhäusser Anwaltssozietät Maximilianstrasse 58 80538 München (DE)** |
| (71) Applicant: **SAMSUNG ELECTRONICS CO., LTD. Suwon-si, Gyeonggi-do (KR)** | |

(54) **H.263/MPEG video encoder using average histogram difference and method for controlling the same**

(57) A H.263/MPEG video encoder using an average histogram difference, and a method for controlling the same are disclosed. The H.263/MPEG video encoder generates a reference image frame for encoding a subsequent input image frame N based on a current input image frame N-1 which is performed by a DCT (Discrete Cosine Transform) and quantization operations for outputting a video stream and a quantized signal. Here, the quantized signal is decoded by an inverse quantization and inverse discrete cosine transform (IDCT) operations. Also, the encoder comprises a mode selection unit for selecting a first mode in which motion estimation/ compensation operations are not performed, if the subsequent image frame N is relatively heavily changed from the reference image frame, after the subsequent image frame N is compared with the reference image frame to remove a temporal redundancy therefrom.

FIG.1

**Description**

The present invention relates to multimedia data services for mobile communication terminals, and more particularly to a H.263/MPEG video encoder using an average histogram difference, and a method for controlling the same, for use in a mobile communication terminal to transmit motion pictures or video data.

Because of bandwidth limitations, second generation (2G) mobile communication terminals were restricted to a voice services. As IMT-2000 technology fully develops, mobile communication terminals using the IMT-2000 technology can provide motion picture services to users. Today, with an increased demand for visual and voice information through mobile communication terminals, a technique for implementing motion pictures in the mobile communication terminal enables the users to obtain desired information.

However, techniques for rapid transmission of a large quantity of image data in real-time, whose quantity corresponds to times of data quantity which can be basically processed by prior art techniques, has severe limitations.

For example, a compression technique for compressing images to transmit compressed image data at a high compression rate and a high speed is essential to transmit motion pictures in real-time. Additionally, a decoding technique for decoding compressed image data, which is called a "real-time motion picture transmission technique" is necessary. A mobile communication terminal adopting the real-time motion picture transmission technique can communicate motion pictures at a fixed rate with another party as a video encoder controls a bit rate.

At the present stage, the 3GPP (3rd Generation Partnership Project) or domestic mobile communication providers are recommending adoption of ITU-T (International Telecommunication Union Recommendations) No. H.263 and MPEG (Motion Picture Experts Group) 4 standards in a video encoder. These compression standards may have different compression rates according to characteristics of images, because they basically include a Discrete Cosine Transformation (DCT) operation and a motion estimation operation. Therefore, it is very difficult to implement a rapid control technique for a bit rate relative to an image data process. Therefore, an alternative technique is recommended in a standard specification, so that the compression rate of images can be controlled through variation of a quantization value. In a compression technique of motion pictures, it is desirable to remove spatial redundancy and temporal redundancy therefrom before compressing. Here, the spatial redundancy is performed in an intra-frame coding mode (I-mode) and the temporal redundancy is performed in an inter-frame coding mode (P-mode).

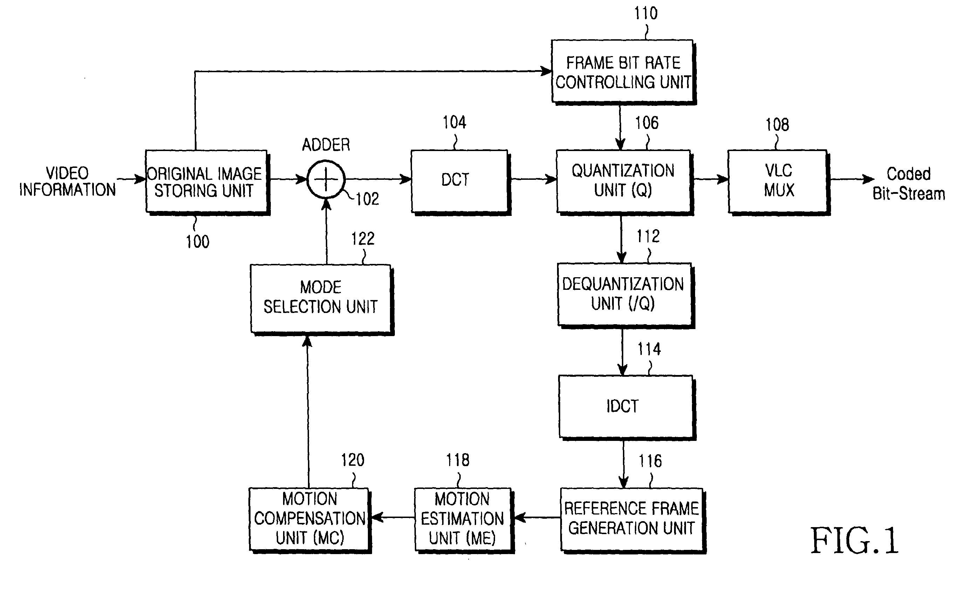

A block diagram showing a general H.263/MPEG video encoder is shown in FIG. 1. Generally, H.263/MPEG video encoders include original image storing unit 100 for receiving and storing video information corresponding to original images as a frame unit, an adder 102 for inputting video information from the original image storing unit 100, and outputting a first image frame of video information and a result generated after operating other image frames following the first image frame with motion compensated information, a DCT (Discrete Cosine Transform) unit 104 for inputting the first image frame and the result, and for generating a DCT coefficient, a quantization unit 106 for quantizing the DCT coefficient to generate quantized data, a dequantization unit 112 for dequantizing the quantized data to produce dequantized data, an IDCT (Inverse Discrete Cosine Transform) unit 114 for transforming the dequantized data in frequency domain to the dequantized data in spatial domain, or decoding information, a reference frame generation unit 116 for combining motion compensated information of a previous image frame N-1 with decoding information of current image frame N performed in the IDCT unit 114, and storing other decoding information for a subsequent image frame N+1 therein, a motion estimation unit 118 inputting the decoding information of the previous image frame N-1 and the current image frame N, and outputting a motion vector and a differential image frame for estimating motion estimation for the subsequent image frame, a motion compensation unit 120 for inputting the motion vector and differential image, and for compensating motion based on decoding information of previous image frame N-1 stored in the reference frame generation unit 116, a frame rate controlling unit 110 for increasing a predetermined encoding time by a rate proportional to the exceeding amount of bits, if the quantity of bits encoded by the current image frame exceeds a predetermined quantity of bits per frame, or controlling a space of the predetermined quantity of bits per frame with by a subsequent encoded image frame, if the current image frame is encoded at less than the predetermined quantity of bits per frame, and a VLC MUX (Variable Length Coding Multiplexer) 108 for multiplexing the quantized data to generate bit-streams based on entropy coding wherein frequently occurring values are allocated a relatively small bit and occasionally occurring values are allocated a relatively large bit.

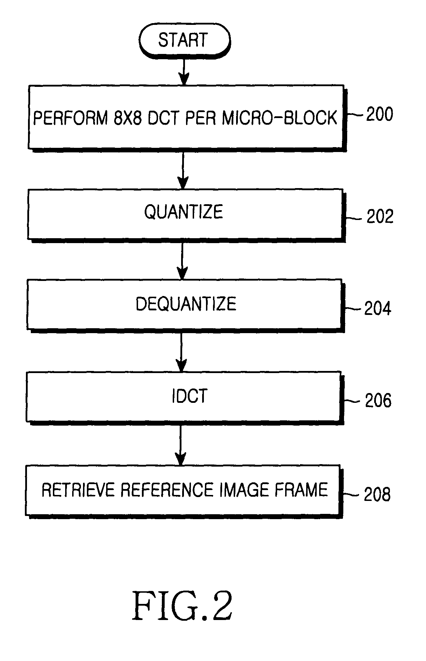

FIG. 2 is a flow chart showing an encoding process of a general H.263/MPEG video encoder when a first image frame is inputted. If a first image frame is inputted to the encoder, it is encoded in an I-frame mode. Namely, the first image frame is performed by an 8 x 8 DCT operation per micro-block to produce a DCT coefficient in the DCT unit 104 at step 200. After that, the DCT coefficient is quantized in the quantization unit 106 to generate quantized data. Then quantized data is multiplexed and outputted in the form of bit-streams from the VLC MUX 108 at step 202. Also, while proceeding with steps 202 to 206, the operations to the first image frame are performed by the discrete cosine transform, inverse transform and inverse discrete cosine transform operations, through the DCT 104, dequantizer 112 and IDCT 114, respectively, to generate a reference image frame for encoding subsequent image frames. The reference image frame is then retrieved in step 208.

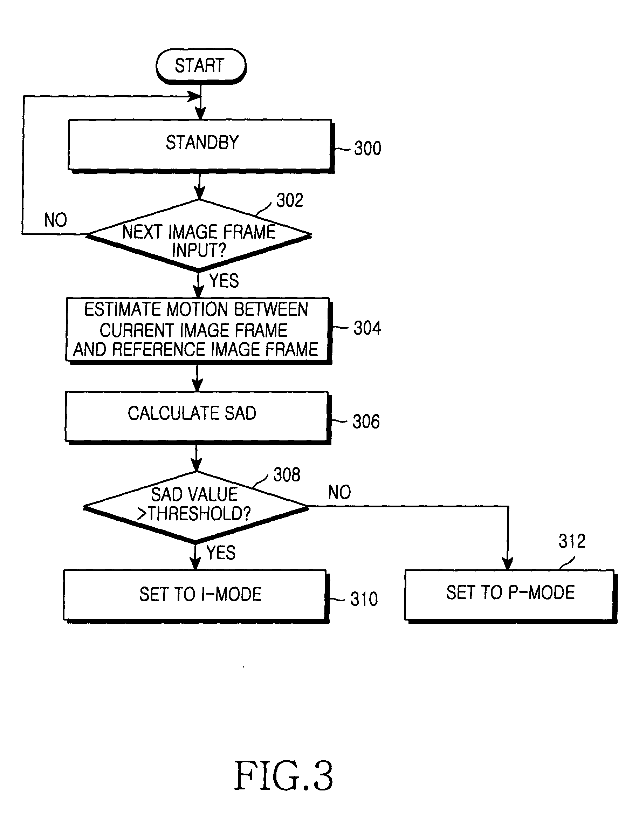

A flow chart showing an encoding process of a general H.263/MPEG video encoder when image frames are inputted is shown in FIG.3. The reference image frame generated through the encoding process as shown in FIG. 2, is maintained in a standby state in the reference generation unit 116 at step 300. If the first image frame is followed by subsequent image frames which are inputted thereto at step 302, motion estimation is performed between a current image frame from among the subsequent image frames and the reference image frame at step 304. A SAD (Sum of Absolute Difference) value is then calculated at step 306. If the SAD value is greater than a predetermined threshold value, the encoding process is set to an I-mode at step 310. Meanwhile, if the SAD value is less than the predetermined threshold value, the encoding process is set to a P-mode at step 312.

After that, if subsequent image frames are inputted into the encoder, they are encoded in the P-mode. Namely, after a predicted image is generated through the motion estimation unit 118 and the motion compensation unit 120, a difference between the current image frame and the predicted image frame is encoded. At this stage, before all areas of the inputted image are encoded based on the difference, an encoding mode is determined whether they are performed by a P-mode operation to remove a temporal redundancy or an I-mode operation to remove a spatial redundancy. In the mode selection step, if a prediction difference after performing a motion compensation operation is less than that after not performing the motion compensation operation by a predetermined value, then the P-mode is selected. Meanwhile, if a prediction difference after performing a motion compensation operation is larger than that after not performing the motion compensation operation by a predetermined value, then the I-mode is selected.

Namely, the encoder employing such video coding standards performs an encoding operation for a first image frame wherein the first image frame is processed by an 8 x 8 DCT operation per micro-block in the DCT 104 and a quantization operation in the quantizer 106, and outputted in the form of bit-streams based on a processed result through the VLC MUX 108. Also, the reference image frame of a spatial range is retrieved by the dequantizer 112 and the IDCT 114 based on the quantized result. Also, when inputting subsequent image frames, motion estimation is performed between a current image frame among from the subsequent image frames and the reference image frame, and a threshold set after a SAD value is calculated. After that, if the SAD value is larger than the threshold value, then the encoder is set to an I-mode wherein motion estimation is not performed, and if the SAD value is less than the threshold value, then the encoder is set to a P-mode in which motion estimation/motion compensation are performed. After that the inputted image frames are encoded. When removing temporal redundancy, a P-mode or I-mode is determined at a mode selection step. In the I-mode, a DCT coefficient is calculated from the inputted image frame provided that a macro-block corresponds to the I-mode. In case of an image block corresponding to the P-mode, a difference between the input image and the predicted image is encoded.

As described above, the prior art H.623/MPEG encoder performs motion estimation/motion compensation operations for all image block areas when a temporal redundancy is removed therefrom. All the image blocks, however, are not encoded in the P-mode. If the gain from performing motion estimation/motion compensation in the mode selection step is not greater than not performing motion estimation/motion compensation, the encoder is set to the I-mode for removing the spatial redundancy. As such, if the area encoded by the I-mode is also performed by the motion estimation/motion compensation operations, the performance of the encoder is decreased.

Namely, in the worst case scenario, after all areas of the inputted image blocks are performed by the motion estimation/motion compensation operations, the image blocks may be encoded in the I-mode. Therefore, even if the motion estimation/motion compensation operations are not necessary, they are redundantly performed.

Therefore the prior art H.263/MPEG encoder has disadvantages in that all areas of the image blocks are performed by the motion estimation operation regardless of the I-mode and P-mode when the inputted images are encoded such that it causes excessive loads.

Therefore, the present invention has been made in view of the above problems.

It is the object of the present invention to provide a H.263/MPEG video encoder capable of previously selecting an encoding mode using an average histogram difference before performing a motion estimation/motion compensation operation for areas of images inputted thereto, and a method for controlling the same.

This object is solved by the subject matter of the independent claims.

Preferred embodiments are defined in the dependent claims.

It is an aspect of the present invention to provide a H.263/MPEG video encoder capable of performing a motion estimation/motion compensation operation for minimally changed areas of images inputted thereto such that the video encoder's performance is enhanced, and a method for controlling the same.

It is another aspect to provide a H.263/MPEG video encoder capable of encoding substantially changed areas of images inputted thereto in a I-mode, and encoding minimally changed areas of images in a P-mode performing a motion estimation/motion compensation, and a method for controlling the same.

In accordance with an aspect of the present invention, the above and other objects can be accomplished by the provision of a H.263/MPEG video encoder generating a reference image frame for encoding a subsequent input image frame N based on a current input image frame N-1 which is performed by a DCT (Discrete Cosine Transform) and quantization operations for outputting a video stream and a quantized signal, the quantized signal being decoded by an inverse quantization and inverse discrete cosine transform (IDCT) operations, the encoder including a mode selection unit for selecting a first mode in which motion estimation/compensation operations are not performed, if the subsequent image frame N is substantially changed from the reference image frame, after the subsequent image frame N is compared with the reference image frame to remove a temporal redundancy therefrom.

In accordance with another aspect of the present invention, there is provided a method for controlling an encoding operation of a H.263/MPEG video encoder generating a reference image frame for encoding a subsequent input image frame N based on a current input image frame N-1 which is performed by DCT (Discrete Cosine Transform) and quantization operations for outputting a video stream and a quantized signal, the quantized signal being decoded by inverse quantization and inverse discrete cosine transform (IDCT) operations, including the steps of calculating an average histogram difference based on the reference image frame, if the subsequent image N is inputted, comparing whether the average histogram difference is larger than a predetermined reference value, selecting the first mode in which motion estimation/compensation operations are not performed if the average histogram difference is larger than the predetermined reference value, wherein the subsequent input image frame is determined to include substantially changed areas, and selecting a second mode in which motion estimation/compensation operations are performed if the average histogram difference is less than the predetermined reference value, wherein the subsequent input image frame is determined to include minimally changed areas.

The above object and other aspects, features and other advantages of the present invention will be more clearly understood from the following detailed description taken in conjunction with the accompanying drawings, in which:

FIG. 1 is a block diagram showing a general H.263/MPEG video encoder;
FIG. 2 is a flow chart showing an encoding process of a general H.263/MPEG video encoder when a first image frame is inputted thereto;
FIG. 3 is a flow chart showing an encoding process of a general H.263/MPEG video encoder when other image frames followed by a first image frame are inputted thereto;
Fig. 4 is a block diagram showing a H.263/MPEG video encoder using an average histogram difference according to an embodiment of the present invention; and
Fig. 5 is a flow chart showing an encoding process of a H.263/MPEG video encoder using an average histogram difference according to an embodiment of the present invention when other image frames followed by a first image frame are inputted thereto.

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may make the subject matter of the present invention unclear. Also, the terms used in the following description are terms defined taking into consideration the functions obtained in accordance with the present invention.

Because prior art video encoders perform motion estimation operations for all areas of an image inputted thereto and then determine whether subsequent images are encoded in a I-mode (removing a spatial redundancy therefrom) or in a P-mode (removing a temporal redundancy therefrom), the prior art video encoders perform motion estimation operations on unnecessary areas of images thus increasing the operating load of the video encoders.

A structure of a video encoder performing motion estimation/motion compensation operations for only relatively minimally changed areas (as opposed to all areas of images inputted thereto) will now be described.

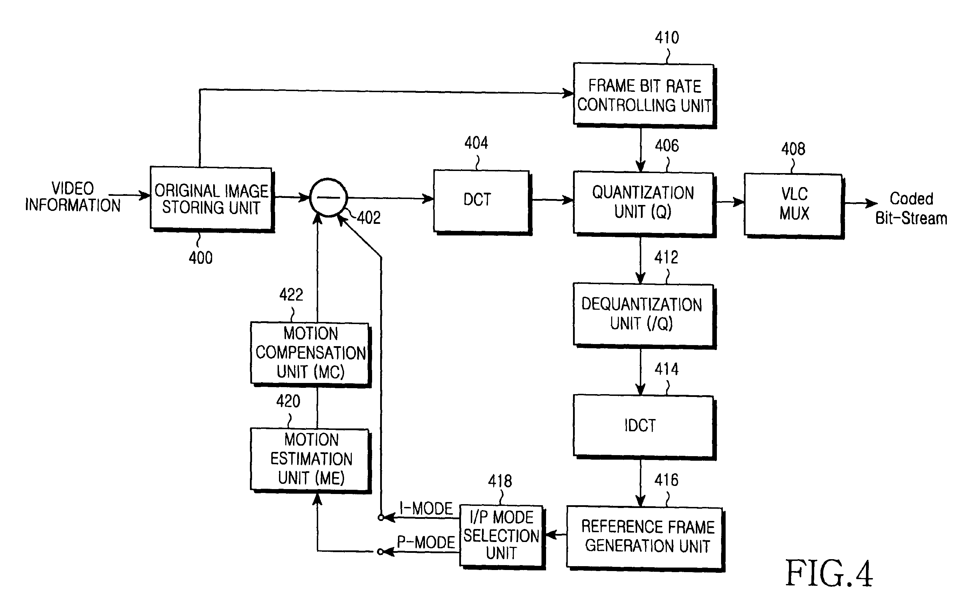

A block diagram showing a H.263/MPEG video encoder using an average histogram difference according to one embodiment of the present invention is shown in FIG. 4.

The H.263/MPEG video encoder includes an original image storing unit 400 for receiving and storing video information corresponding to original images as a frame unit, a subtracter 402 for inputting video information from the original image storing unit 400, and outputting a first image frame of video information and a result generated after operating on other image frames followed by the first image frame with motion compensated information, a DCT (Discrete Cosine Transform) unit 404 for inputting the first image frame and the result and for generating a DCT coefficient, a quantization unit 406 for quantizing the DCT coefficient to generate quantized data, a dequantization unit 412 for dequantizing the quantized data to produce dequantized data, a IDCT (Inverse Discrete Cosine Transform) unit 414 for transforming the dequantized data in a frequency domain to dequantized data in a spatial domain, or decoding information, a reference frame generation unit 416 for combining motion compensated information of a previous image frame N-1 with decoding information of a current image frame N performed in the IDCT unit 414, and storing other decoding information for a subsequent image frame N+1 therein, an I/P mode selection unit 418 for inputting decoding information of the previous image frame N-1 and the current image frame n, and selecting one of a P-mode and an I-mode, a motion estimation unit 420 inputting decoding information of a previous image frame N-1 and the current image frame N from the I/P-mode selection unit 418 in the P-mode, and outputting a motion vector and a differential image frame for performing motion estimation, a motion compensation unit 422 for inputting the motion vector and differential image, and for compensating motion based on the decoding information of the previous image frame N-1 stored in the reference frame generation unit 416, a frame rate controlling unit 410 for increasing a predetermined encoding time by a rate of the exceeding amount of bits, if a quantity of bits encoded by the current image frame exceeds a predetermined quantity of bits per frame previously allocated, or controlling a determined quantity of bits per frame used by a subsequent encoded image frame, if the current image frame is encoded at less than the predetermined quantity of bits per frame, and a VLC MUX (Variable Length Coding Multiplexer) 408 for multiplexing the quantized data to generate bit-stream based on entropy coding wherein frequently occurring values are allocated fewer bits than occasionally occurring values, thus conserving space due to bit allocation.

Here, the I/P mode selection unit 418 calculates an average histogram difference for a current image frame N based on decoding information of the previous image frame N-1, and determines whether a micro-block area is encoded in a P-mode or I-mode. Here, the average histogram difference (AHD) is expressed as the following Equation (1):

$$AHD = \frac{\sum_{i=0}^{255} |A(f)(i) - B(g)(i)|}{256} \qquad \text{Eq. (1)}$$

where f and g denote gray values of an image frame A (or previous image frame N-1) and image frame B (or current image frame N), respectively.

Now, if the AHD is larger than a reference value which is previously set, the encoder operates in the I-mode, and if the AHD is smaller than the reference value, it operates in the P-mode. Namely, the P-mode is selected to perform motion estimation/motion compensation operations for minimally changed areas of the image inputted thereto using the average histogram difference having a relatively small calculation quantity, and the I-mode (wherein motion estimation/motion compensation operations are not performed) is selected for substantially changed areas of the image inputted thereto.

Therefore, the H.263/MPEG encoder of the present invention can efficiently compress images by reducing the processing load on the encoder such that images are classified based on whether they require motion estimation/ motion compensation operations based on changed area quantity of images inputted thereto compared with the reference image frame.

Meanwhile, when selecting the I or the P mode, the following Equation (2) is a reference value for comparing with the average histogram difference which is calculated by a previous image frame N-1 as a reference image frame for a current image frame N.

$$\overline{X} = \begin{bmatrix} x_1 \\ x_2 \\ \cdot \\ \cdot \\ \cdot \\ x_n \end{bmatrix} . \qquad \text{Eq. (2)}$$

where $X_1$, $X_2$, ..., $X_n$ are sample values experimentally obtained from the average histogram differences using the Equation (1) for a test image frame.

Also, a confidence interval of 95% for X values is set. Assume that sample values, $X_1$, $X_2$, ..., $X_n$ have a normal distribution with an average μ and a standard deviation σ, then the confidence interval of 95% is expressed as the following Equation (3):

$$\bar{X} - 1.96 \cdot \frac{\sigma}{\sqrt{n}}, \ \bar{X} + 1.96 \cdot \frac{\sigma}{\sqrt{n}} \qquad \text{Eq. (3)}$$

wherein, $\bar{X}$ is an average of the sample values, $x_1, x_2, ..., x_n$.

In the present invention, the reference value is determined by an upper bound value of the confidence interval. Namely, if the average histogram difference is larger than the upper bound value of the confidence interval, then the H.263/MPEG encoder of the present invention is set to the I-mode. Meanwhile, if it is smaller than the upper bound value, then the H.263/MPEG encoder is set to the P-mode. Therefore, if the H.263/MPEG encoder is set to the P-mode, the inputted image frames are encoded by the motion estimation/motion compensation operations.

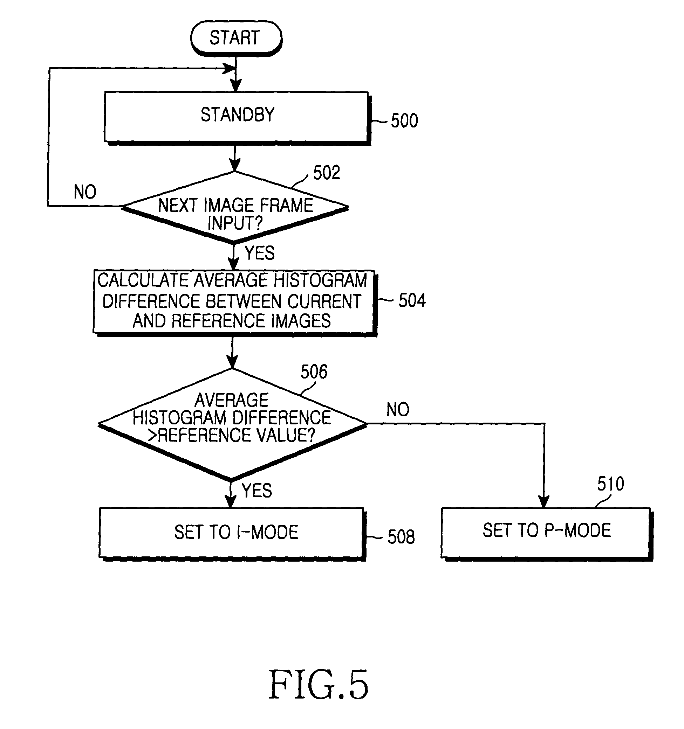

Now, in the H.263/MPEG encoder of the present invention, before performing the motion estimation/motion compensation operations for areas of images inputted thereto, a method for selecting an encoding mode using the average histogram difference will be described with reference to FIG. 5.

A flow chart showing an encoding process of a H.263/MPEG video encoder using an average histogram difference according to one embodiment of the present invention when other image frames followed by a first image frame are inputted thereto is shown in FIG. 5.

Assuming that a reference image frame for encoding the inputted image frames is generated in the same fashion as is shown in FIG. 2, when a reference image frame is maintained in a standby state in the reference generation unit 416 at step 500, if subsequent image frames are inputted to the encoder at step 502, the encoder calculates an average histogram difference of the reference image for a current image frame among from the subsequent image frames at step 504. After that, the average histogram difference is compared with a predetermined reference value in step 506. Here, the reference value is calculated by the Equation (2), and is utilized regardless of whether the image frame change between the current image frame and the reference image frame is large or small. Namely, if the calculated average histogram difference is larger than the reference value, then the encoder is set to the I-mode to encode the inputted image frames at step 508. Namely, areas of image frames having a relatively large change are encoded in the I-mode, in which the motion estimation/motion compensation operations are not performed in the motion estimation unit 402 and motion compensation unit 422, respectively.

Meanwhile, if the calculated average histogram difference is smaller than the reference value, then the encoder is set to the P-mode to encode the inputted images at step 510. Namely, areas of images having a minimal change are encoded in the P-mode performing motion estimation/motion compensation using an average histogram difference with a relatively small calculation quantity. With reference to FIG. 4, if the P-mode is selected by the I/P mode selection unit 418, the motion estimation unit 420 and the motion compensation unit 422 are operated to predict and compensate motion.

The H.263/MPEG encoder of the present invention can select an encoding mode effectively to improve the compression efficiency and speed of the H.263/MPEG encoder. The H.263/MPEG encoder of the present invention operating based on an average histogram difference for selecting an encoding mode can be adopted to a MPEG or H.263 compression.

Since the H.263/MPEG encoder of the present invention classifies areas into those which need the motion estimation/motion compensation operations and those which do not need them, it can reduce load for encoding or compressing the inputted image frames.

As mentioned above, since the H.263/MPEG encoder of the present invention selectively performs the motion estimation/motion compensation operations depending on image blocks, its performance can be enhanced. Also, since areas of image frames requiring the motion estimation/motion compensation are processed based on an average histogram difference having a relatively small calculation quantity, a minimal quantity of time is consumed for the motion estimation/motion compensation operations. Also, since the H.263/MPEG encoder of the present invention is operated according as areas of image frames having a relatively small change are encoded in the P-mode, and areas of images having a relatively large change are encoded in the I-mode based on the average histogram difference, motion prediction errors rarely occur.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. An H.263/MPEG video encoder generating a reference image frame for encoding subsequent input image frame N based on a current input image frame N-1 which is performed by a Discrete Cosine Transform, DCT, and quantization operations for outputting a video stream and a quantized signal, the quantized signal being decoded by an inverse quantization and inverse discrete cosine transform, IDCT, operations, the encoder comprising:

a mode selection unit for selecting a first mode in which motion estimation/compensation operations are not performed, if differences between a subsequent image frame N and a current image frame N-1 are above a reference value, after the subsequent image frame N is compared with the reference image frame to remove a temporal redundancy therefrom.

2. The encoder as set forth in claim 1, wherein the mode selection unit calculates an average histogram difference based on the reference image frame, determines whether the average histogram difference is larger than the predetermined reference value, and selects the first mode in which motion estimation/compensation operations are not performed if the average histogram difference is larger than the predetermined reference value or a second mode in which motion estimation/compensation operations are performed if the average histogram difference is less than the predetermined reference value.

3. The encoder as set forth in claim 2, wherein the predetermined reference value is a value to determine change degree of the subsequent input image frame N from the reference image frame.

4. A method for controlling an encoding operation of a H.263/MPEG video encoder generating a reference image frame for encoding subsequent input image frame N based on a current input image frame N-1 which is performed by a Discrete Cosine Transform, DCT, and quantization operations for outputting a video stream and a quantized signal, the quantized signal being decoded by an inverse quantization and inverse discrete cosine transform, IDCT, operations, comprising the steps of:

calculating an average histogram difference based on the reference image frame, if the subsequent image N is inputted;
comparing whether the average histogram difference is larger than the predetermined reference value,
selecting the first mode in which motion estimation/compensation operations are not performed if the average histogram difference is larger than the predetermined reference value; and
selecting a second mode in which motion estimation/compensation operations are performed if the average histogram difference is less than the predetermined reference value.

5. The control method as set forth in claim 4, wherein the predetermined reference value is a threshold to determine a first or a second mode for encoding image frames using a statistical method, wherein the predetermined reference value is utilized to determine whether image frame change of the subsequent image frame N is large or small compared with the reference image frame.

6. The control method as set forth in claim 5, wherein the predetermined reference value is determined as the following equation,

$$\overline{X} = \begin{bmatrix} x_1 \\ x_2 \\ . \\ . \\ . \\ x_n \end{bmatrix}$$

wherein $x_1$, $x_2$, ..., $x_n$ are experimental values of the average histogram difference.

7. The control method as set forth in one of claims 4 to 6, further comprising the step of:

selecting the first mode in which motion estimation/compensation operations are not performed if the average histogram difference is larger than the predetermined reference value, wherein the subsequent input image frame is determined to include substantially changed areas.

**8.** The control method as set forth in one of claims 4 to 7, further comprising the step of:

selecting a second mode in which motion estimation/compensation operations are performed if the average histogram difference is less than the predetermined reference value, wherein the subsequent input image frame is determined to include minimally changed areas.

FIG.1

EP 1 592 257 A1

FIG.2

```
                    ┌─────────┐
                    │  START  │
                    └────┬────┘
                         │
        ┌────────────────┼
        │           ┌────▼─────────────────┐
        │           │      STANDBY         │── 300
        │           └────┬─────────────────┘
        │                │
        │                ▼           302
        │          ╱─────────────╲
   NO   │         ╱ NEXT IMAGE FRAME╲
  ◄─────┴────────◄     INPUT?        ╲
                  ╲                 ╱
                   ╲───────────────╱
                         │ YES
                         ▼
              ┌──────────────────────────┐
              │ ESTIMATE MOTION BETWEEN   │
              │   CURRENT IMAGE FRAME     │── 304
              │ AND REFERENCE IMAGE FRAME │
              └──────────┬───────────────┘
                         │
                         ▼
              ┌──────────────────────────┐
              │     CALCULATE SAD         │── 306
              └──────────┬───────────────┘
                         │
                         ▼         308
                   ╱───────────╲        NO
                  ╱ SAD VALUE    ╲─────────────┐
                  ╲ >THRESHOLD?  ╱              │
                   ╲───────────╱               │
                        │ YES                  │ 312
                        ▼                       ▼
              ┌──────────────────┐   ┌──────────────────┐
              │  SET TO I-MODE   │── 310   │  SET TO P-MODE   │
              └──────────────────┘   └──────────────────┘
```

# FIG.3

FIG.4

EP 1 592 257 A1

START

STANDBY — 500

NEXT IMAGE FRAME INPUT? — 502

NO

YES

CALCULATE AVERAGE HISTOGRAM DIFFERENCE BETWEEN CURRENT AND REFERENCE IMAGES — 504

AVERAGE HISTOGRAM DIFFERENCE >REFERENCE VALUE? — 506

NO

YES

SET TO I-MODE — 508

SET TO P-MODE — 510

FIG.5

# EP 1 592 257 A1

**European Patent Office**

## EUROPEAN SEARCH REPORT

Application Number

EP 05 00 6647

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 592 226 A (LEE ET AL) 7 January 1997 (1997-01-07) | 1-5,7,8 | H04N7/26 H04N7/50 |
| Y | * column 9, line 36 - column 10, line 52; figure 4 * * column 15, line 53 - column 16, line 6 * * column 16, line 30 - line 48 * * column 27, line 13 - line 26 * * column 28, line 1 - line 61; figures 39-41 * | 6 | |
| | ----- | | |
| Y | SHEN K ET AL: "A fast algorithm for video parsing using MPEG compressed sequences" PROCEEDINGS OF THE INTERNATIONAL CONFERENCE ON IMAGE PROCESSING. (ICIP). WASHINGTON, OCT. 23 - 26, 1995, LOS ALAMITOS, IEEE COMP. SOC. PRESS, US, vol. VOL. 3, 23 October 1995 (1995-10-23), pages 252-255, XP010197072 ISBN: 0-7803-3122-2 * paragraph [02.2] * | 6 | |
| | ----- | | TECHNICAL FIELDS SEARCHED (Int.Cl.7) |
| X | WO 03/079681 A (NOKIA CORPORATION; NOKIA INC) 25 September 2003 (2003-09-25) | 1 | H04N |
| A | * page 5, line 18 - page 6, line 3; figure 1 * | 2-8 | |
| | ----- | | |
| A | US 2002/196974 A1 (QI WEI ET AL) 26 December 2002 (2002-12-26) * paragraphs [0046] - [0048], [0078]; figure 7 * | 1-8 | |
| | ----- | | |

The present search report has been drawn up for all claims

| Place of search | Date of completion of the search | Examiner |
|---|---|---|
| The Hague | 30 May 2005 | Georgiou, G |

**ANNEX TO THE EUROPEAN SEARCH REPORT
ON EUROPEAN PATENT APPLICATION NO.**                    EP 05 00 6647

This annex lists the patent family members relating to the patent documents cited in  the above-mentioned European search report.
The members are as contained in the European Patent Office EDP file on
The European Patent Office is in no way  liable for these particulars which are merely  given for the purpose of information.

30-05-2005

| Patent document cited in search report | | Publication date | Patent family member(s) | | Publication date |
|---|---|---|---|---|---|
| US 5592226 | A | 07-01-1997 | AU | 1729495 A | 15-08-1995 |
| | | | CA | 2182005 A1 | 03-08-1995 |
| | | | EP | 0741945 A1 | 13-11-1996 |
| | | | JP | 9509024 T | 09-09-1997 |
| | | | WO | 9520863 A1 | 03-08-1995 |
| | | | US | 5565920 A | 15-10-1996 |
| WO 03079681 | A | 25-09-2003 | AU | 2003209566 A1 | 29-09-2003 |
| | | | BR | 0304565 A | 07-12-2004 |
| | | | CA | 2478691 A1 | 25-09-2003 |
| | | | EP | 1486065 A1 | 15-12-2004 |
| | | | WO | 03079681 A1 | 25-09-2003 |
| | | | US | 2003202594 A1 | 30-10-2003 |
| US 2002196974 | A1 | 26-12-2002 | US | 2005025358 A1 | 03-02-2005 |
| | | | US | 2005100213 A1 | 12-05-2005 |

EPO FORM P0459

For more details about this annex : see Official Journal of the European Patent Office, No. 12/82